# EUROPEAN PATENT SPECIFICATION

(11) **EP 3 618 039 B1**
(45) Date of publication and mention of the grant of the patent: **15.02.2023**
(21) Application number: 18191600.8
(22) Date of filing: 30.08.2018
(51) Int. Cl.: G09B 5/00, G09B 5/04, G09B 5/06, G09B 19/06

(54) **A SYSTEM FOR RECORDING AN INTERPRETATION OF A SOURCE MEDIA ITEM**
SYSTEM ZUM AUFZEICHNEN EINER INTERPRETATION EINES QUELLMEDIENELEMENTS
SYSTÈME PERMETTANT D'ENREGISTRER UNE INTERPRÉTATION D'UN D'ARTICLE MULTIMÉDIA SOURCE

(43) Date of publication of application: 04.03.2020
(73) Proprietor: Televic Education, 8870 Izegem (BE)
(72) Inventor: Callewaert, Sven, 8820 Torhout (BE); De Donder, Xavier, 8870 Izegem (BE)
(74) Representative: IP HILLS NV

(56) References cited:
- CA-A1- 2 725 177
- LU-A2- 91 549
- Anonymous: "Cristian's algorithm - Wikipedia", , 15 July 2018 (2018-07-15), pages 1-2, XP055532592, Retrieved from the Internet: URL:https://en.wikipedia.org/w/index.php?t itle=Cristian's_algorithm&oldid=850375441 [retrieved on 2018-12-11]

## Description

### Field of the Invention

The present invention generally relates to a system for recording an interpretation of a source media item by a student. The source media item corresponds to an audio and/or video source item that is streamed from a teacher computer to one or several student computers. The interpretation by the student and the source media item are recorded during playout of the source media item such that the interpretation can be reviewed and evaluated afterwards.

### Background of the Invention

In a PC (personal computer) based language translation or interpretation training platform, an audio and/or video source item is streamed from a teacher PC to a plurality of student PCs of respective students that each must interpret the audio and/or video source while it is being played out. The audio and/or video source item that is streamed may be selected by the teacher from a database containing training material or may be selected from the internet. For instance, a teacher may select a Youtube movie that is streamed from the teacher PC to student PCs to be interpreted by the students.

In order to be able to review, discuss and evaluate the interpretations by the different students, the student speech and/or images are recorded during playout of the source item using for instance the microphone and/or webcam of the student PC. Robustness of the recording of the student speech and/or images is of utmost importance in order to be able to reliably and objectively evaluate the student afterwards.

At present, systems are available wherein the source media item that is streamed from the teacher PC to the student PCs is recorded on all student PCs in order to get it synchronised with a local recording of student speech and/or images. Such recordings represent huge files that must be stored temporarily on the student PCs and that must be transmitted back to the teacher PC for evaluation.

Apart from the fact that the recording of the source media item and the recording of the student speech/images represent huge files that consume substantial student PC and network resources, many errors can occur during the recordings and/or during the synchronization of the recordings. Network glitches or artefacts for instance may influence the recording of the source media item at a student PC. Network glitches or artefacts also may hamper the transmission of recordings from a student PC to the teacher PC. Local processes running on the student PCs like for instance firewalls, virus scanners, etc., may restrict the available processing power or storage capacity as a result of which the recording of the source media item or the recording of student speech/images may be delayed or interrupted. The hard disk of a student PC whereon a recording is stored may become occupied for seconds by other processes as a result of which the student speech/images in the recordings may be shifted over seconds, whereas evaluation of an interpretation typically requires lipsync accuracy, i.e. milliseconds accuracy in the synchronization between source media item and interpreter's speech/images. Summarizing, the student PC environment and the network between the teacher PC and student PCs cannot be sufficiently controlled and relied upon for robust source media item and interpretation recording and synchronization.

International patent application WO 2017/106939 A1 from applicant Televic Education NV, entitled "Conference System for the Training of Interpreters", describes a system for training and evaluating student interpreters. The system comprises a teacher unit (125), student units (145a-145c) and a digital network (the so called second digital network in WO 2017/106939 A1, represented by the dotted lines in Fig. 1). The teacher unit and student units can be standard PCs. The teacher unit records the source signal as well as speech/video images captured by and obtained from the student units. The problem of synchronising the recorded source signal with the student speech/images when evaluating the student is mentioned on page 5, lines 26-32 and page 9, lines 31-34, but WO 2017/106939 A1 fails to disclose a technical solution to this synchronization problem. Furthermore, WO 2017/106939 A1 assumes on page 12, lines 1-8, that the network has sufficient capacity. The many network artefacts that can hamper or delay the transmission and/or recording of source signal and student speech/images thus are neglected in WO 2017/106939 A1.

The Luxemburg patent application LU91549A2 describes another electronic learning system for students of conference interpretation that makes use of personal computers. The system known from LU91549A2 allows a teacher to select a source item from a database and to stream the source item to the student PCs. The source item can be recorded centralized or it can be recorded locally in the student PCs. A student has the option to select synchronized interpretation (speaking while the source media item is played out) or consecutive interpretation (first watching the source media item, then interpreting). In the situation where synchronized interpretation is elected by a student, a speech signal locally recorded by the student PC shall be timestamped in order to enable synchronized playout of the locally recorded speech signal with the source item. The system known from LU91549A2 as mentioned in paragraph [0011] further relies on a dedicated player that mutes one of the audio channels (for instance the PC loudspeaker, the headphone's left ear, the headphone's right ear, etc.) at playback of the source item, and replaces the muted signal with the synchronized recorded student speech for evaluation.

LU91549A2 recognizes the problem of resource consumption at the student PC and mitigates this problem by recording no student video images at the student PCs - only student speech is recorded locally - and by restricting the amount of audio files that is recorded locally at a student PC to 9 (see [0072]). Thereafter, local storage resources must be freed by transferring speech recordings to a central storage.

LU91549A2 however does not seem to recognize possible network or PC problems that may hamper or delay the transmission of source item, and the recording of student speech either locally or centrally. Even if the timestamps allocated in LU91549A2 to local student speech recording enable to synchronize the start of the student speech and the source media item, it is not taught how they enable to continuously synchronize the student speech with the source item as required for objective evaluation of a student.

Canadian patent application CA 2 725 177 A1 entitled "Reproducing Apparatus and Method, and Recording Medium" concerns a system and method for reproduction of still images, like for instance a browsable slide show, to which sub audio data is separately added. CA 2 725 177 A1 addresses the problem of preventing interruptions in the reproduction of background music during reverse and forward play of still images that is unavoidable when conventional reproducing technology is used (see pg. 8, lines 22-27). The conventional reproducing technology pointed to by CA 2 725 177 A1 is the mechanism known from MPEG standards to synchronize the reproduction of video data and audio data that are encoded in a single MPEG file. This mechanism is described on pg. 1-7 of CA 2 725 177 A1 and relies on three timestamps: an ATS that determines at the receiver side when a so called TS packet is forwarded to the decoder for being demultiplexed into a video packet and an audio packet, a DTS that determines when the video packet is decoded, and a PTS that determines when the audio packet is decoded. The PTS is also used to synchronize the reproduction of video data and audio data.

### Summary of the Invention

It is an object of the present invention to disclose a system for recording the interpretation of a source media item by one or several student interpreters that mitigates one or several of the above-identified problems of existing solutions. More particularly, it is an objective to disclose a system that allows a more robust recording and synchronization of student speech/images with the source media item that served as task for the interpretation, in order to enable a more reliable and objective evaluation of interpretations of that source media item by students.

According to the present invention, the above object is realized by the system for recording an interpretation of a source media item defined by claim 1, suitable for training of student interpreters when streaming the source media item from a teacher computer to a plurality of student computers that are network connected to the teacher computer.

Thus, the recording of student speech and/or images, captured by the student computer during playout of the source media item in a so called synchronized interpretation, is done in multiple chunks. The speech may be captured using the built-in microphone of the student PC. In addition to the student speech, images may be captured using for instance the built-in webcam in the student PC. In case of an interpretation in sign language for deaf or hard hearing people, only images may be captured of the student without speech being captured. Each chunk has a predetermined limited length in time, for instance a predetermined amount of seconds, or a predetermined limited size, for instance a predetermined amount of samples. By recording the student speech and/or images in multiple chunks, the risk of losing a complete recording of an interpretation due to a temporary PC failure is eliminated. Each chunk shall be stored as a separate file. During the recording, not only the student speech and/or images are stored in chunks, but also additional metadata is stored in relation to each chunk. The additional metadata at least comprises a timestamp and an index of a speech sample (or of a number of speech samples) or an index of a video frame (or of a number of video frames) recorded in the related chunk. The additional metadata for each chunk further also may comprise a header that contains the recording name, type, status and audio or video specific information like the encoding rate (in bits per second or bps), the sampling rate (in frames per second or fps), the width and height, etc. The recording of student speech and/or images in chunks and the generation and storage of metadata in relation to each chunk are jointly considered to constitute the pre-processing. The timestamp and index will later be used in a post-processing step wherein the recorded audio and/or video chunks comprising the student speech and/or images are merged respectively into a single audio file and/or a single video file that is continuously synchronized with the source media item that served as task for the interpretation. The continuous synchronization is obtained by analysing the timestamps and indexes stored as metadata in relation to the chunks, and by adding or deleting audio samples and/or video frames in between the chunks each time there is a mismatch between the recorded timestamp and index. If for instance 3 speech samples are not captured due to a process occupying the student PC resources, the timestamp stored in relation to the next recorded chunk may be TS=5 whereas the corresponding audio sample index may be I=2. Upon merging the recorded chunks into a single audio file, the timestamp value TS=5 indicates that 3 audio samples must be inserted before the recorded speech sample with index I=2 is added to the audio file. Hence, the post-processing adds or deletes audio samples and/or video frames in order to obtain a recording of the student interpretation with correct length, continuously synchronized with the source media item, and continuously synchronized with other students' interpretations if multiple students simultaneously interpret the streamed source media item.

It is noticed that in the context of the current invention, a speech sample or student speech sample is a value or a set of values representing the student's speech as captured at a point in time by a microphone, for instance the built-in microphone in the student PC. An audio sample is a value or set of values representing sound at a point in time. The audio sample may correspond to student speech but must not necessarily correspond to student speech. It may represent any other sound recorded or artificially composed, like for instance silence.

Similarly, it is noticed that in the context of the current invention, an image, an image frame or student image is a set of digital values representing a picture of the student as captured at a point in time by a camera, for instance the built-in webcam in the student PC. A video frame on the other hand is a set of digital values representing a picture at a point in time. The video frame may correspond to a student image but must not necessarily correspond to a student image. It may represent any other picture recorded or artificially composed, like for instance a blanc picture.

The term continuously synchronized in the context of the current invention implies that the student interpretation composed from the recorded student speech and/or image chunks has an overall length in time that corresponds to the length in time of the source media item, and each recorded fixed length chunk or fixed size chunk in the composed student interpretation is time aligned with the corresponding portion of the source media item, being the portion of the source media item that was played out by the student PC at the point in time the chunk was recorded.

In embodiments of the system for recording an interpretation of a source media item defined by claim 2, the pre-processing module and post-processing module are hosted by the student computer, and the system further comprises:
- an upload module in the student computer configured to upload the interpretation to said teacher computer.

Indeed, the recording module that generates chunks of student speech and/or images, that generates metadata, and that stores the metadata in relation with the chunks may be hosted by the student computer. Alternatively or additionally however, the student speech and/or images captured by the microphone and/or webcam integrated in the student computer may be streamed or uploaded to the teacher computer or another central system that hosts the recording module for the pre-processing or parts of the recording module. Pre-processing the captured student speech and/or images locally in the student computer brings the advantage that the generated chunks are not impacted by any uplink network glitches, but requires that the student computer has sufficient resources available for the pre-processing. Pre-processing the captured student speech and/or images centrally in the teacher computer or in another central system may be less vulnerable to resource shortage when for instance the central system is a performant dedicated system that is configured to have as few resource hungry processes as possible, but may suffer from uplink network glitches during the uploading of student speech and/or images resulting in missing chunks.

Similarly, the post-processing module that composes the student interpretation from the stored chunks and related metadata may be hosted by the student computer. In such case, the student computer must host an upload module that is able to upload the locally generated student interpretation to the teacher computer or another central system. Alternatively however, the post-processing may be organized centrally in the teacher computer or another central system. In the latter situation, the post-processing module in the teacher computer or central system must obtain the chunks and the related metadata either from the centralized pre-processing module, from the decentralized pre-processing modules in the student computers, or from a storage facility like for instance a server or cloud store wherein the chunks and metadata are temporarily stored.

In embodiments of the system for recording an interpretation of a source media item defined by claim 3, each chunk has a length of N video frames, N being a positive integer number above zero.

Thus, preferably, in case student images are recorded while the source media item is played out, the captured student images are recorded in chunks that each contain the same integer amount of N video frames. For instance, each chunk may contain one video frame, that is a single image made by the webcam at a point in time, or - more realistically - each chunk may contain thousand video frames that correspond to thousand consecutive images made by the webcam at thousand consecutive points in time determined by the frame rate of the webcam. A video chunk of one minute for example typically comprises about 900 video frames. In such embodiments, each chunk has the same length in time but not necessarily the same size because the size of video frames depends on the encoding thereof.

In embodiments of the system for recording an interpretation of a source media item specified by claim 4, N is configurable.

Thus, advanced embodiments of the system according to the present invention enable the user or administrator to configure the length of the chunks when expressed as an amount of video frames. The length of the chunks may be selected in trade-off between pre-processing requirements and post-processing requirements. A shorter chunk length increases the pre-processing requirements as more, shorter chunks are created and stored, and more extensive metadata is generated. A corrupted record however will have a shorter length, consequently reducing the post-processing requirements for restauration thereof. Similarly, a greater chunk length decreases the pre-processing requirements as less chunks are created and stored, and less metadata is generated that must be processed afterwards. In case of a corrupted recording however, the post-processing required for restauration of such longer chunk will be higher.

In embodiments of the system for recording an interpretation of a source media item specified by claim 5, each chunk has a length of M audio samples, M being a positive integer number above zero.

Thus, preferably, in case student speech is recorded while the source media item is played out, the captured student speech is recorded in chunks that each contain the same integer amount of M audio samples. For instance, each chunk may contain one million audio samples that correspond to one million consecutive discrete time samples of the sound wave captured by the built-in microphone at one million consecutive points in time determined by the audio sampling rate of the analog-to-digital converter. An audio chunk of 1 minute for example typically contains about 1.3 million samples. In such embodiments, each chunk has the same length in time and also the same size determined by the sample width or bit depth of the analog-to-digital converter, i.e. the amount of bits per audio sample.

In embodiments of the system for recording an interpretation of a source media item specified by claim 6, M is configurable.

Indeed, advanced embodiments of the system according to the present invention enable the user or administrator to configure the length of the chunks when expressed as an amount of audio samples. The length of the chunks may be selected in trade-off between pre-processing requirements and post-processing requirements. A shorter chunk length increases the pre-processing requirements as more, shorter chunks are created and stored, and more extensive metadata is generated. A corrupted record however will have a shorter length, consequently reducing the post-processing requirements for restauration thereof. Similarly, a greater chunk length decreases the pre-processing requirements as less chunks are created and stored, and less metadata is generated that must be processed afterwards. In case of a corrupted recording however, the post-processing required for restauration of such longer chunk will be higher.

According to the invention as claimed, the video frames added while composing the interpretation are repeated video frames of a previous video frame.

In case the chunks comprise student images, missing chunks or corrupted chunks can be restored during the post-processing by adding video frames such that the overall interpretation remains continuously synchronized with the source media item. The video frame that is added during post-processing corresponds to the previous video frame. This way, the impact on the user experience during review and evaluation of the student interpretation is minimized as the only effect such repeated video frame will have is a standstill of the video recording that forms part of the student interpretation. Moreover, when the amount of repeated frames is limited, the standstill will be unnoticeable for the user.

According to the invention as claimed, audio samples added while composing the interpretation are silent audio samples.

In case the chunks comprise student speech samples, missing chunks or corrupted chunks can be restored during the post-processing by adding audio samples such that the overall interpretation remains continuously synchronized with the source media item. An audio sample that is added during the post-processing corresponds to a silent sample. This way, the impact on the user experience during review and evaluation of the student interpretation is minimized as the only effect such silent audio sample will have is temporary absence of any sound.

In addition to a system for recording an interpretation of a source media item as defined by claim 1, the present invention also concerns a corresponding method for recording an interpretation of a source media item, suitable for training of student interpreters when streaming the source media item from a teacher computer to a plurality of student computers that are network connected to the teacher computer, the method being defined by claim 7.

### Brief Description of the Drawings

Fig. 1 illustrates a PC environment wherein an embodiment of the system for recording interpretations of a source media item by student interpreters according to the present invention has been deployed;
Fig. 2 is a functional block scheme of an embodiment of the system for recording interpretations of a source media item by student interpreters according to the present invention;
Fig. 3 illustrates the pre-processing in an embodiment of the system for recording interpretations of a source media item by student interpreters according to the present invention;
Fig. 4 illustrates the post-processing in an embodiment of the system for recording interpretations of a source media item by student interpreters according to the present invention;
Fig. 5 illustrates the pre-processing and post-processing in an embodiment of the system for recording interpretations of a source media item by student interpreters according to the present invention; and
Fig. 6 illustrates a suitable computing system 600 for realizing methods and devices according to embodiments of the invention.

### Detailed Description of Embodiment(s)

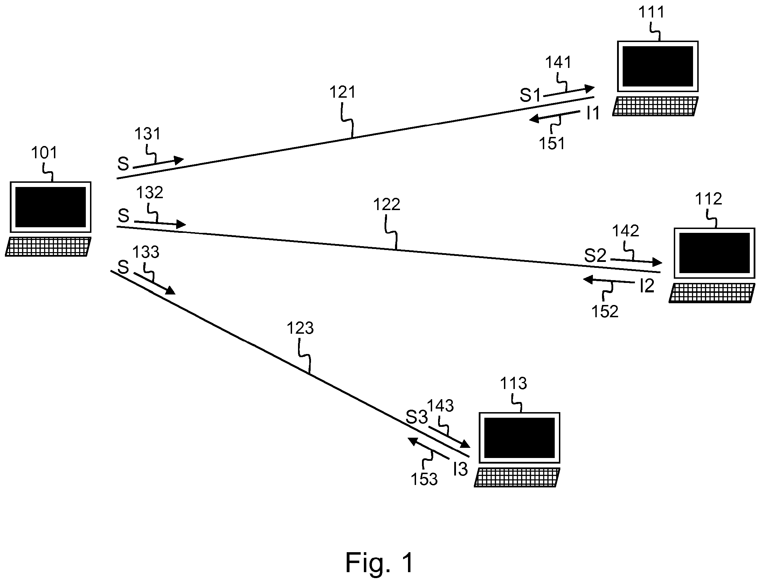

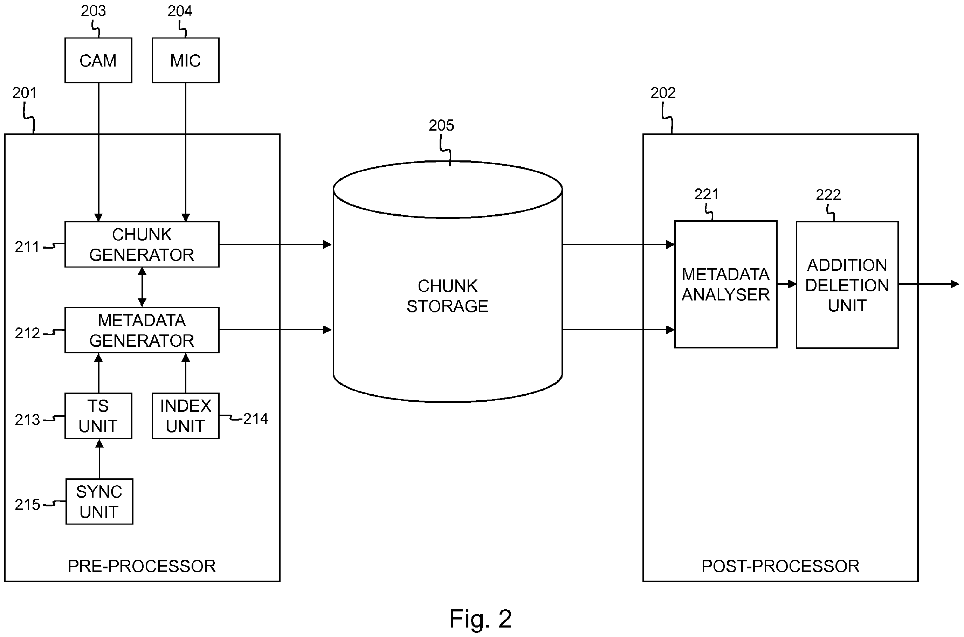

In Fig. 1 a teacher computer 101 is connected to student computers 111, 112 and 113 via respective links 121, 122 and 123. The connectivity between teacher computer 101 and student computers 111, 112, 113 may be realised through wireline or wireless Local Area Network (LAN) connections. This may be the case when the teacher and student computers are located in a single room like for example a classroom in a training centre. Alternatively, one or several of the links 121, 122, 123 realizing the connectivity between teacher computer 101 and respective student computers 111, 112, 113 may partially run over public, wide area networks like for instance the Internet. This may for instance be the case if one or several of the student computers are located at home to enable a student interpreter to participate remotely in a training exercise. During a training exercise, the teacher selects a source media item S, for instance a Youtube movie. This source media item S is streamed to the different student computers 111, 112, 113, as is indicated by the arrows 131, 132 and 133. As a result of network glitches or artefacts the streamed source media item S arrives in affected form at the respective student computers 111, 112, 113. The first student computer 111 receives a first version S1 or 141 of the streamed source media item S, the second student computer 112 receives a second version S2 or 142 of the streamed source media item S, and the third student computer receives a third version S3 or 143 of the streamed source media item S. The student interpreters using the respective computers 111, 112 and 113 are requested to interpret the source media item while it is played out. The interpretations I1, I2 and I3 by the student interpreters are recorded and uploaded to the teacher computer 101 as is indicated by the arrows 151, 152 and 153. As a result of local processes, for example virus scanners, firewalls, etc., running on the student computers 111, 112, and 113, playout of the source media item S1, S2 and S3 as received by these computers, and recording of the interpretations I1, I2 and I3 using integrated or connected hardware like a webcam, microphone, headphone, etc., may be interrupted or delayed. Further, the upload of the interpretations I1, I2 and I3 over the network links 121, 122 and 122 may again be affected by network glitches or artefacts. For evaluation purposes, the teacher must be able to playout the recorded interpretations I1, I2, I3 in synchronism with the source media item, either the original version S or the versions S1, S2, S3 received by the respective student computers 111, 112, 113 and used there as basis for the respective interpretations I1, I2 and I3. Objective evaluation of the interpretations I1, I2, I3 requires synchronisation accuracy in the range of milliseconds. As a result of the many possible sources of artefacts mentioned here above, the student PC environment illustrated by Fig. 1 cannot be relied upon for robust source item streaming, and interpretation recording and synchronization. For this reason, a system for recording interpretations of a source media item according to the invention has been deployed in the PC network environment of Fig. 1. The functional components of this system are illustrated by Fig. 2.

Fig. 2 shows a pre-processor 201 or recording module, and a post-processor 202 that jointly constitute an embodiment of the system for recording an interpretation of a source media item according to the present invention. Fig. 2 further shows a camera 203 and microphone 204, the outputs of which are used by the pre-processor 201. The camera 203 and microphone 204 may for instance correspond to the built-in camera of student computer 111 and the built-in microphone of student computer 111. Fig. 2 further also shows a chunk storage 205. This chunk storage 205 represents a memory wherein information produced by the pre-processor 201 is stored. The chunk storage 205 may for instance correspond to the hard disk that forms part of student computer 111, the hard disk that forms part of the teacher computer 101, or any other memory integrated in or connected to the student computer 111 or any other memory integrated in or connected to the teacher computer, like for instance an USB disk, a server, a cloud storage, etc. It is noticed that the chunk storage 205 is used by the system according to the present invention but not necessarily forms part of the system.

The pre-processor 201, also named recording module throughout the text and claims, comprises a chunk generator 211, a metadata generator 212, a timestamp unit 213, an index unit 214 and a synchronizing unit 215. The chunk generator 211 is configured to receive the output streams from the camera 203 and microphone 204, and to divide these streams in chunks which are segments of fixed length or fixed size for storage in the chunk storage 205. The metadata generator 212 interacts with the chunk generator 211 and is configured to generate metadata for each chunk that is also stored in the chunk storage 205. The metadata composed by the metadata generator 212 for each chunk at least comprises a timestamp received from the timestamp unit 213 and an index received from the index unit 214. The timestamp generated by the timestamp unit 213 is network synchronized, meaning it is synchronized between the teacher computer and student computers, through synchronization unit 215. The index generated by the index unit 214 may for instance be an index number of the first audio sample received from microphone 204 and integrated in a chunk, or it may be an index number of a video frame received from camera 203 and integrated in a chunk.

The post-processor 202 comprises a metadata analyser 221 and an addition/deletion unit 222. The metadata analyser 221 is configured to obtain chunks and their associated metadata from the chunk storage 205. The addition/deletion unit 222 uses the output of the metadata analyser 221 to compose the student interpretation, and thereto adds and/or deletes audio samples or video frames to the chunks extracted from the chunk storage in order to produce an interpretation that is continuously synchronized with the source media item that served as basis for the interpretation.

At least the pre-processor 201 is hosted by the student computers 111, 112, 113. The post-processor 202 then may be hosted by the teacher computer 101, or it may be hosted by the student computers 111, 112, 113 depending on the available processing resources in these respective computers.

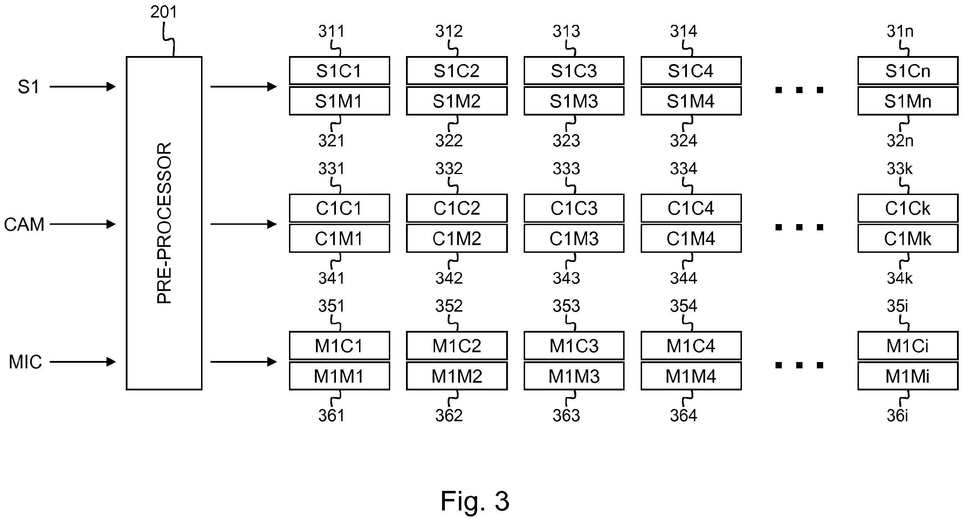

Fig. 3 illustrates in more detail the operation of the pre-processor 201. It is assumed that the pre-processor 201 is hosted by student computer 111 where source media item S1 is received and played out. While source media item S1 is played out, the pre-processor 201 is recording the source media item S1 as well as student images CAM captured by the webcam integrated in student computer 111 and student speech MIC captured by the built-in microphone of student computer 111. The source media item S1 is split into chunks, S1C1 or 311, S1C2 or 312, S1C3 or 313, S1C4 or 314, ..., S1Cn or 31n. These chunks each have the same length in time, for instance 1 minute playout time of the source media item S1 at student computer 111. For each of the chunks 311 ... 31n, the pre-processor 201 generates associated metadata. The metadata consists of a timestamp locally generated in student computer 111 at the time the associated chunk is recorded and an index indicative for the video frames that are recorded in the associated chunk. This way, metadata S1M1 or 321 is generated in association with the first source media item chunk 311, metadata S1M2 or 322 is generated in association with the second source media item chunk 312, metadata S1M3 or 323 is generated in association with the third source media item chunk 313, metadata S1M4 or 324 is generated in association with the fourth source media item chunk 314, ..., and metadata S1Mn or 32n is generated in association with the n'th source media item chunk 31n. The source media item chunks 311 ... 31n are stored locally in the student computer 111 in n different files. Also the generated metadata 321 ... 32n are stored locally in the student computer 111 in n different files. It is noticed that in an alternative implementation, a chunk and its associated metadata may be stored in a single file instead of in two separate files. In a similar fashion, the student images CAM are split into chunks, C1C1 or 331, C1C2 or 332, C1C3 or 333, C1C4 or 334, ..., C1Cn or 31k by the pre-processor 201. These chunks also have the same length in time, i.e. 1 minute in the above example. For each of the chunks 331 ... 33k, the pre-processor 201 generates associated metadata. The metadata consists of a timestamp locally generated in student computer 111 at the time the associated chunk is recorded and an index indicative for the video frames that are recorded in the associated chunk. This way, metadata C1M1 or 341 is generated in association with the first student image chunk 331, metadata C1M2 or 342 is generated in association with the second student image chunk 332, metadata C1M3 or 343 is generated in association with the third student image chunk 333, metadata C1M4 or 344 is generated in association with the fourth student image chunk 334, ..., and metadata C1Mk or 33k is generated in association with the k'th student image chunk 33k. It is noticed that the amount k of student image chunks may differ from the amount n of source media item chunks because the student computer 111 may be prevented from recording certain chunks due to various processes running on student computer 111 and occupying the resources thereof. The student image chunks 331 ... 33k are stored locally in the student computer 111 in k different files. Also the generated metadata 341 ... 34k are stored locally in the student computer 111 in k different files. Again, it is noticed that in an alternative implementation, a chunk and its associated metadata may be stored in a single file instead of in two separate files. Further similarly, the student speech MIC is split into chunks, M1 C1 or 351, M1C2 or 352, M1C3 or 353, M1C4 or 354, ..., M1Ci or 35i by the pre-processor 201. These chunks also have the same length in time, i.e. 1 minute. For each of the chunks 351 ... 35i, the pre-processor 201 generates associated metadata. The metadata consists of a timestamp locally generated in student computer 111 at the time the associated chunk is recorded and an index indicative for the audio samples that are recorded in the associated chunk. This way, metadata M1M1 or 361 is generated in association with the first student speech chunk 351, metadata M1M2 or 362 is generated in association with the second student speech chunk 352, metadata M1M3 or 363 is generated in association with the third student speech chunk 353, metadata M1M4 or 364 is generated in association with the fourth student speech chunk 354, ..., and metadata M1Mi or 36i is generated in association with the i'th student speech chunk 35i. It is noticed that the amount i of student speech chunks may differ from the amount k of student image chunks and/or from the amount n of source media item chunks because the student computer 111 may be prevented from recording certain chunks due to various processes running on student computer 111 and occupying the resources thereof. The student speech chunks 351 ... 35i are stored locally in the student computer 111 in i different files. Also the generated metadata 361 ... 36i are stored locally in the student computer 111 in i different files. Again, it is noticed that in an alternative implementation, a chunk and its associated metadata may be stored in a single file instead of in two separate files.

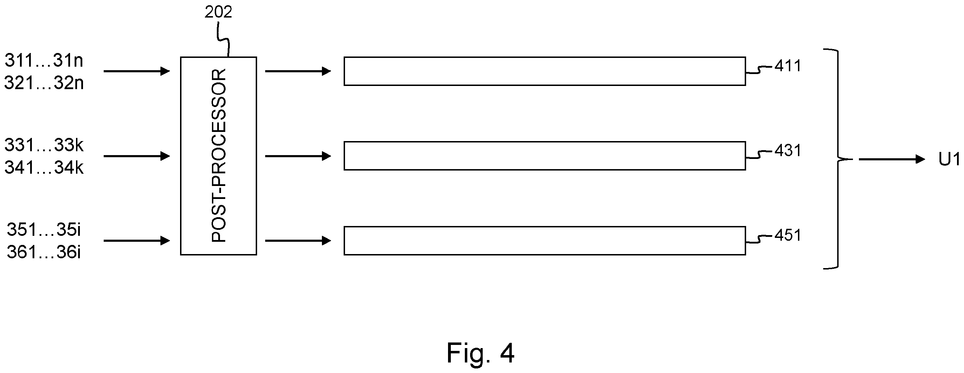

Fig. 4 illustrates the operation of the post-processor 202. It is assumed that the post-processor 202 is hosted by student computer 111 and is operating on the source media item chunks 311 ... 31n and their respective associated metadata files 321 ... 32n, the student image chunks 331 ... 33k and their respective associated metadata files 341 ... 34k, and the student speech chunks 351 ... 35i and their respective associated metadata files 361 ... 36i. The metadata analyser 221 in the post-processor 202 analyses the metadata files 321 ... 32n. Upon analysis of the metadata files 321 ... 32n, the addition/deletion unit 222 adds or deletes samples or frames and combines the samples or frames from the source media item chunks 311 ... 31n with the added/deleted samples or frames into a single file 411. In the example of Fig. 4, it is assumed that samples or frames are added to or deleted from the n chunks S1C1 ... S1Cn recorded by the pre-processor 201 as a result of which the source media item file 411 is composed. Upon analysis of the metadata files 341 ... 34k, the addition/deletion unit 222 adds or deletes frames to or from the student image chunks 331 ... 33k as a result of which another single file 431 is composed. The so composed file 431 has a length equal to the length of file 411, The added frames represent repetitions of the respective frames after which they have been added, and the frames have been inserted at positions in the file 431 such that continuous synchronization is realized between file 431 and file 411. In other words, frames at corresponding positions in the files 411 and 431 were recorded with identical timestamps by the pre-processor 201 such that when played out synchronously, the student images recorded while a certain portion of the source media item was played out, are visualized simultaneously enabling an objective evaluation of the student. Upon analysis of the metadata files 361 ... 36i, the addition/deletion unit 222 adds or deletes samples to or from the student speech chunks 351 ... 35i as a result of which yet another single file 451 is composed. The so composed file 451 has a length equal to the length of files 411 and 431. The added samples represent silent samples, i.e. samples filled with silent audio samples, and the added samples have been inserted at positions in the file 451 such that continuous synchronization is realized between file 451 and files 411 and 431. In other words, samples or frames at corresponding positions in the files 411, 431 and 451 were recorded with identical timestamps by the pre-processor 201 such that when played out synchronously, the student images and student speech recorded while a certain portion of the source media item was played out, are visualized and made audible simultaneously enabling an objective evaluation of the student. The locally generated source media item file 411, student image file 431 and student speech file 451 combinedly form an uploadable student interpretation U1 that is uploaded from the student computer 111 to the teacher computer 101. In a similar way, an uploadable interpretation is generated locally in student computer 112 and uploaded to teacher computer 101 and an uploadable interpretation is generated locally in student computer 113 and uploaded to teacher computer 101. All uploadable interpretations are continuously synchronized thanks to the network wide synchronized timestamp that is used by the respective instantiations of the pre-processor 201 in the student computers 111, 112, 113.

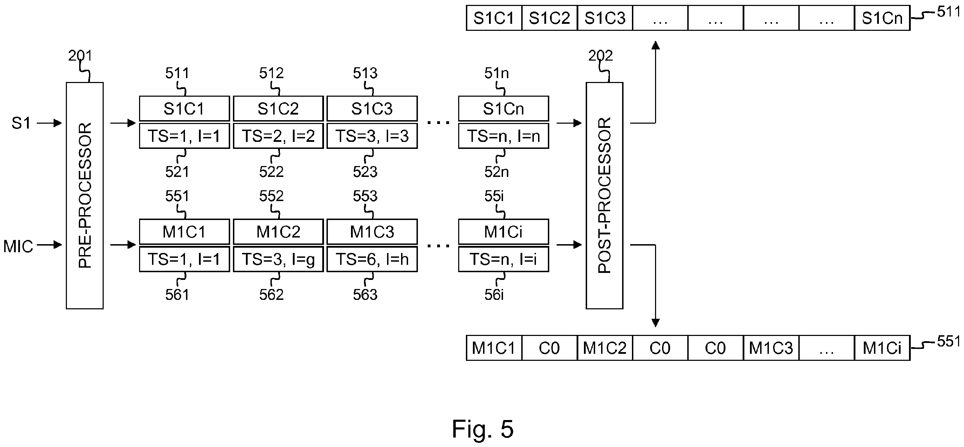

Fig. 5 illustrates the operation of the pre-processor 201 and post-processor 202 in a specific example situation wherein it is assumed that the pre-processor 201 and post-processor 202 are hosted by the student computer 111, a source media item S1 is received by that student computer 111 and recorded together with student speech MIC captured by the built-in microphone of student computer 111 while the source media item S1 is played out. The pre-processor 201 splits the source media item S1 into chunks S1C1 or 511, S1C2 or 512, S1C3 or 513, ..., and S1Cn or 51n. These chunks 511-51n contain portions of the source media item S1 of equal length in time, e.g. the length in time of playout of a single video frame by the student computer. Note that this is a simplified, theoretic example as in real implementations it may be expected that the length of a chunk shall span multiple video frames, for instance have a length of 1 minute corresponding to approximately 1000 video frames. For each of the chunks 511-51n, metadata is generated consisting of a timestamp TS generated by the timestamp unit 213 at the time the corresponding chunk is played out, and an index I generated by index unit 214 and representing a sequence number of the video frame in the corresponding chunk. In Fig. 5 it is assumed that the received source media item S1 is divided in chunks 511-51n and that these chunks are played out by the student computer 111 without interruptions. Consequently, the metadata 521 generated in association with the first chunk 511 comprises a timestamp TS=1 and an index I=1, the metadata 522 generated in association with the second chunk 512 comprises a timestamp TS=2 and an index I=2, the metadata 523 generated in association with the third chunk 513 comprises a timestamp TS=3 and an index I=3, ... and the metadata 52n generated in association with the n'th chunk 51n comprises a timestamp TS=n and an index I=n. In a similar way, the pre-processor 201 splits the captured student speech MIC into chunks M1C1 or 551, M1C2 or 552, M1C3 or 553, ..., and M1Ci or 55i. These chunks 551-55i also have the same length in time, for instance a predetermined amount of audio samples corresponding to the length in time of a video frame. For each of the chunks 551 ... 55i, the pre-processor 201 generates respective metadata 561 ... 56i. The metadata 561 ... 56i consists of a timestamp value TS generated by timestamp unit 213 at the time the corresponding chunk was captured, and an index number I generated by index unit 214 and corresponding to a sequence number of the first audio sample recorded in the corresponding chunk. In Fig. 5 it has been assumed that certain audio samples have not been recorded, for instance because the student computer 111 was running short in resources. The first chunk 551 was recorded at time TS=1 and its first audio sample has the index I=1. At time TS=2 no audio samples are recorded. The second chunk 552 consequently was recorded at time TS=3 and its first audio sample has the index I=g. At times TS=4 and TS=5 no audio samples were recorded. The third chunk 553 consequently was recorded at time TS=6 and its first audio sample has the index I=h. The i'th chunk M1Ci was recorded at time TS=n, i.e. the time where also the last chunk 51n of the source media item was played out, and its first audio sample has the index i. Although not illustrated by Fig. 5, the chunks 511 ... 51n of the source media item S1 and their respective associated metadata 521 ... 52n are stored in chunk storage 205 as separate files. Similarly, the chunks 551 ... 55i of the student speech MIC and their associated metadata 561 ... 56i are stored in chunk storage 205 as separate files. The post processor 202 extracts the chunks and their associated metadata from the chunk storage 205. The metadata analyser 221 in the post-processor 202 analyses the metadata 521-52n and concludes therefrom that no video frames are missing in the recorded chunks for the source media item. The metadata analyser 221 consequently instructs the addition/deletion unit 222 to compose a single file 511 from the recorded chunks 511-51n without addition/deletion of any video frames. The metadata analyser 221 in the post-processor 202 also analyses the metadata 561-56i and concludes therefrom that audio samples are missing at times TS=2, TS=4, TS=5, etc. The metadata analyser 221 consequently instructs the addition/deletion unit 222 to compose a single file 551 from the recorded student speech chunks 551-55n wherein silent audio samples C0 are inserted at time TS=2, i.e. between the samples M1 C1 and M1C2, silent samples C0 are inserted at time TS=4 and TS=5, i.e. between the samples M1C2 and M1C3, etc. It is further noticed that also inside the chunks silent audio samples may be added where student speech samples are missing and/or corrupted speech samples may be deleted. This way, an audio file 551 is composed that has a length in time equal to the length in time of media file 511, and wherein all recorded student speech samples are continuously synchronized with portions of the media file 511 that were played out at the time these student speech samples were recorded. The student computer 111 uploads the so composed media file 511 and audio file 551 to the teacher computer 101 for evaluation of the student interpreter.

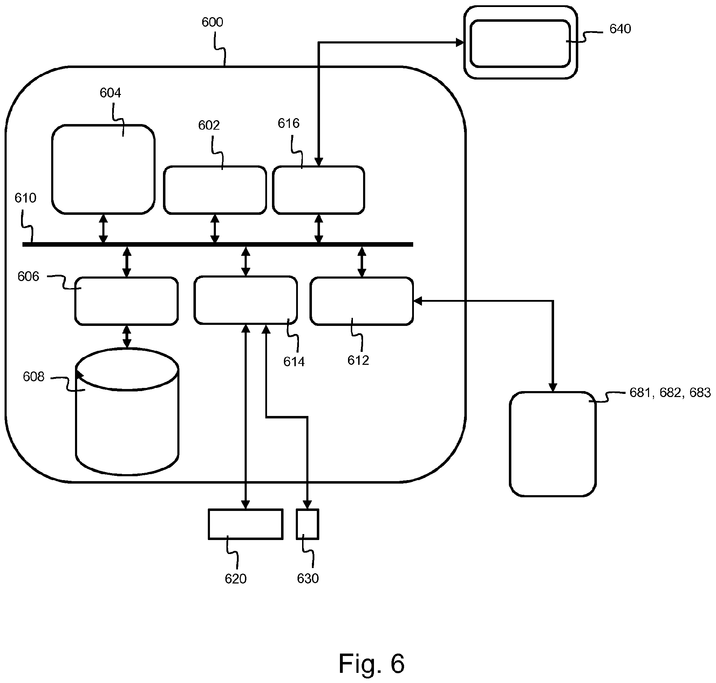

Fig. 6 shows a suitable computing system 600 enabling to implement embodiments of the system and method for recording an interpretation of a source media item according to the invention. Computing system 600 may in general be formed as a suitable general-purpose computer and comprise a bus 610, a processor 602, a local memory 604, one or more optional input interfaces 614, one or more optional output interfaces 616, a communication interface 612, a storage element interface 606, and one or more storage elements 608. Bus 610 may comprise one or more conductors that permit communication among the components of the computing system 600. Processor 602 may include any type of conventional processor or microprocessor that interprets and executes programming instructions. Local memory 604 may include a random-access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator or user to input information to the computing device 600, such as a keyboard 620, a mouse 630, a pen, voice recognition and/or biometric mechanisms, a camera, etc. Output interface 616 may comprise one or more conventional mechanisms that output information to the operator or user, such as a display 640, etc. Communication interface 612 may comprise any transceiver-like mechanism such as for example one or more Ethernet interfaces that enables computing system 600 to communicate with other devices and/or systems, for example with other computing devices 681, 682, 683. The communication interface 612 of computing system 600 may be connected to such another computing system by means of a local area network (LAN) or a wide area network (WAN) such as for example the internet. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example SATA disk drives, and control the reading and writing of data to and/or from these storage elements 608. Although the storage element(s) 608 above is/are described as a local disk, in general any other suitable computer-readable media such as a removable magnetic disk, optical storage media such as a CD or DVD, - ROM disk, solid state drives, flash memory cards, ... could be used. It is noticed that the entire method according to the present invention can be executed centralized, e.g. on a server in a management centre or in a cloud system, or it can be partially executed on a remote electronic device, e.g. worn by the user, and partially on a central server. Computing system 600 could thus correspond to the processing system available centrally or the processing system available in the electronic device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of the claims are therefore intended to be embraced therein. In other words, it is contemplated to cover any and all modifications, variations or equivalents that fall within the scope of the claimed subject-matter. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A system for recording an interpretation (151) of a source media item (131, 141), suitable for training of student interpreters when streaming said source media item (131, 141) from a teacher computer (101) to a plurality of student computers (111, 112, 113) that are network connected to said teacher computer (101), said system **characterised in that** it comprises:
- a pre-processing module (201) hosted by a student computer (111) configured to:
- record said source media item (131, 141) while played out in fixed length or fixed size source media item chunks (311-31n; 511-51n), generate for each source media item chunk (311-31n; 511-51n) metadata (321-32n; 521-52n) comprising a timestamp locally generated in said student computer (111) at the time the associated source media item chunk (311-31n; 511-51n) is recorded and an index indicative for the video frames that are recorded in the associated source media item chunk (311-31n; 511-51n), and store said metadata (321-32n; 521-52n) in relation with said source media item chunk (311-31n; 511-51n); and
- record student speech (MIC) and/or images (CAM) that are captured by a student computer (111) during playout of said source media item (131, 141) in fixed length or fixed size student speech chunks and/or student image chunks (351-35i; 331-33k; 551-55i), generate for each student speech chunk and/or student image chunk (351-35i; 331-33k; 551-55i) metadata (361-36i; 341-34k; 561-56i) comprising a timestamp locally generated in said student computer (111) at the time the associated student speech chunk and/or student image chunk (351-35i; 331-33k; 551-55i) is recorded and an index of at least one speech sample or image frame recorded in said student speech chunk and/or student image chunk (351-35i; 331-33k; 551-55i), and store said metadata (361-36i; 341-34k; 561-56i) in relation with said student speech chunk and/or student image chunk (351-35i; 331-33k; 551-55i); and
- a post-processing module (202) configured to:
- compose a source media item file (411; 511) from said source media item chunks (311-31n; 511-51n), and thereto add silent audio samples / repeated video frames to said source media item chunks (311-31n; 511-51n) when there is a mismatch between said timestamp and said index recorded in said metadata or when said timestamps indicate missing samples / video frames, and delete corrupted audio samples / video frames from said source media item chunks (311-31n; 511-51n); and
- compose said interpretation (151; 431, 451; 551) of said source media item (131, 141) from said student speech chunks and/or said student image chunks (351-35i; 331-33k; 551-55i), and thereto add silent audio samples / repeated video frames to said student speech chunks and/or said student image chunks (351-35i; 331-33k; 551-55i) when there is a mismatch between said timestamp and said index recorded in said metadata or when said timestamps indicate missing samples / video frames, and delete corrupted audio samples / video frames from said student speech chunks and/or said student image chunks (351-35i; 331-33k; 551-55i) while composing said interpretation (151; 431, 451; 551) such that said interpretation (151; 431, 451; 551) is continuously synchronized with said source media item file (411; 511) implying that each chunk in said interpretation (151; 431, 451; 551) is time aligned with the portion in said source media item file (411; 511) that was played out by said student computer (111) at the point in time said chunk was recorded.

2. A system for recording an interpretation (151) of a source media item (131, 141) according to claim 1, wherein said pre-processing module (201) and said post-processing module (202) are hosted by said student computer (111), said system further comprising:
- an upload module in said student computer (111) configured to upload said interpretation (151) to said teacher computer (101).

3. A system for recording an interpretation (151) of a source media item (131, 141) according to claim 1 or claim 2, wherein each chunk (331-33k) has a length of N video frames, N being a positive integer number above zero.

4. A system for recording an interpretation (151) of a source media item (131, 141) according to claim 3, wherein N is configurable.

5. A system for recording an interpretation (151) of a source media item (131, 141) according to claim 1 or claim 2, wherein each chunk (351-35i) has a length of M audio samples, M being a positive integer number above zero.

6. A system for recording an interpretation (151) of a source media item (131, 141) according to claim 5, wherein M is configurable.

7. A method for recording an interpretation (151) of a source media item (131, 141), suitable for training of student interpreters when streaming said source media item (131, 141) from a teacher computer (101) to a plurality of student computers (111, 112, 113) that are network connected to said teacher computer (101), said method **characterised in that** it comprises the steps of:
- recording by a student computer (111) said source media item (131, 141) while played out in fixed length or fixed size source media item chunks (311-31n; 511-51n);
- generating by said student computer (111) for each source media item chunk (311-31n; 511-51n) metadata (321-32n; 521-52n) comprising a timestamp locally generated in said student computer (111) at the time the associated source media item chunk is recorded and an index indicative for the video frames that are recorded in the associated source media item chunk;
- storing by said student computer (111) said metadata (321-32n; 521-52n) in relation with said source media item chunk (311-31n; 511-51n);
- recording by said student computer (111) student speech (MIC) and/or images (CAM) that are captured by a student computer (111) during playout of said source media item (141) in fixed length or fixed size student speech chunks and/or student image chunks (351-35i; 331-33k; 551-55i);
- generating by said student computer (111) for each student speech chunk and/or student image chunk (351-35i; 331-33k; 551-55i) metadata (361-36i; 341-34k; 561-56i) comprising a timestamp locally generated in said student computer (111) at the time the associated student speech chunk and/or student image chunk (351-35i; 331-33k; 551-55i) is recorded and an index of at least one speech sample or image frame recorded in said student speech chunk and/or student image chunk (351-35i; 331-33k; 551-55i);
- storing by said student computer (111) said metadata (361-36i; 341-34k; 561-56i) in relation with said student speech chunk and/or student image chunk (351-35i; 331-33k; 551-55i);
- composing a source media item file (411; 511) from said source media item chunks (311-31n; 511-51n), and thereto adding silent audio samples / repeated video frames to said source media item chunks (311-31n; 511-51n) when there is a mismatch between said timestamp and said index recorded in said metadata or when said timestamps indicate missing samples / video frames, and deleting corrupted audio samples / video frames from said source media item chunks (311-31n; 511-51n); and
- composing said interpretation (151; 431, 451; 551) of said source media item (131) from said student speech chunks and/or said student image chunks (351-35i; 331-33k; 551-55i), and thereto adding silent audio samples / repeated video frames to said student speech chunks and/or said student image chunks (351-35i; 331-33k; 551-55i) when there is a mismatch between said timestamp and said index recorded in said metadata or when said timestamps indicate missing samples / video frames, and deleting corrupted audio samples / video frames from said student speech chunks and/or said student image chunks (351-35i; 331-33k; 551-55i) while composing said interpretation (151; 431, 451; 551) such that said interpretation (151; 431, 451; 551) is continuously synchronized with said source media item file (411; 511) implying that each chunk in said interpretation (151; 431, 451; 551) is time aligned with the portion in said source media item file (411; 511) that was played out by said student computer (111) at the point in time said chunk was recorded.

## Patentansprüche

1. System zum Aufzeichnen einer Verdolmetschung (151) eines Quellmedienobjekts (131, 141), das zum Ausbilden von Schülerdolmetschern geeignet ist, bei einem Streaming des Quellmedienobjekt (131, 141) von einem Lehrercomputer (101) zu einer Vielzahl von Schülercomputern (111, 112, 113), die über ein Netzwerk mit dem Lehrercomputer (101) verbunden sind, wobei das System **dadurch gekennzeichnet ist, dass** es Folgendes umfasst:
- ein Vorverarbeitungsmodul (201), das von einem Schülercomputer (111) gehostet wird, der zu Folgendem konfiguriert ist:
- Aufzeichnen des Quellmedienobjekts (131, 141), während es in Quellmedienobjekt-Blöcken (311-31n; 511-51n fester Länge oder fester Größe wiedergegeben wird, Erzeugen von Metadaten (321-32n; 521-52n) für jeden Quellmedienobjekt-Block (311-31n; 511-51n), umfassend einen Zeitstempel, der lokal in dem Schülercomputer (111) an dem Zeitpunkt erzeugt wird, an dem der assoziierte Quellmedienobjekt-Block (311-31n; 511-5 1n) aufgezeichnet wird, und eines Index, der indikativ für die Videoframes ist, die in dem assoziierten Quellmedienobjekt-Block (311-31n; 511-51n) aufgezeichnet werden, und Speichern der Metadaten (321-32n; 521-52n) in Bezug auf den Quellmedienobjekt-Block (311-31n; 511-51n); und
- Aufzeichnen von Schülersprache (MIC) und/oder Bildern (CAM), die von einem Schülercomputer (111) während einer Wiedergabe des Quellmedienobjekts (131, 141) erfasst werden, in Schülersprachblöcken fester Länge oder fester Größe und/oder Schülerbildblöcken (351-35i; 331-33k; 551-55i), Erzeugen von Metadaten (361-36i; 341-34k; 561-56i) für jeden Schülersprachblock und/oder Schülerbildblock (351-35i; 331-33k; 551-55i), umfassend einen Zeitstempel, der lokal in dem Schülercomputer (111) an dem Zeitpunkt erzeugt wird, an dem der assoziierte Schülersprachblock und/oder Schülerbildblock (351-35i; 331-33k; 551-55i) aufgezeichnet wird, und eines Index von mindestens einer Sprachprobe oder Bildframe, die/das in dem Schülersprachblock und/oder Schülerbildblock (351-35i; 331-33k; 551-55i) aufgezeichnet ist, und Speichern der Metadaten (361-36i; 341-34k; 561-56i) in Bezug auf den Schülersprachblock und/oder Schülerbildblock (351-35i; 331-33k; 551-55i); und
- ein Nachbearbeitungsmodul (202), das zu Folgendem konfiguriert ist:
- Zusammenstellen einer Quellmedienobjekt-Datei (411; 511) aus den Quellmedienobjekt-Blöcken (311-31n; 511-51n), und dazu Hinzufügen von stummen Hörproben/wiederholten Videoframes zu den Quellmedienobjekt-Blöcken (311-31n; 511-51n), wenn es eine Nichtübereinstimmung zwischen dem Zeitstempel und dem in den Metadaten aufgezeichneten Index gibt oder wenn die Zeitstempel fehlende Proben / Videoframes angeben, und Löschen beschädigter Hörproben / Videoframes aus den Quellmedienobjekt-Blöcken (311-31n; 511-51n); und
- Zusammenstellen der Verdolmetschung (151; 431, 451; 551) des Quellmedienobjekts (131, 141) aus den Schülersprachblöcken und/oder den Schülerbildblöcken (351-35i; 331-33k; 551-55i), und dazu Hinzufügen stummer Hörprobenen / wiederholter Videoframes zu den Schülersprachblöcken und/oder den Schülerbildblöcken (351-35i; 331-33k; 551-55i), wenn es eine Nichtübereinstimmung zwischen dem Zeitstempel und dem in den Metadaten aufgezeichneten Index gibt oder wenn die Zeitstempel fehlende Proben / Videoframes angeben, und Löschen beschädigter Hörproben / Videoframes aus den Schülersprachblöcken und/oder den Schülerbildblöcken (351-35i; 331-33k; 551-55i) beim Zusammenstellen der Verdolmetschung (151; 431, 451; 551), sodass die Verdolmetschung (151; 431, 451; 551) kontinuierlich mit der Quellmedienobjekt-Datei (411; 511) synchronisiert wird, was impliziert, dass jeder Block in der Verdolmetschung (151; 431, 451; 551) zeitlich mit dem Abschnitt in der Quellmedienobjekt-Datei (411; 511) ausgerichtet ist, der von dem Schülercomputer (111) an dem Zeitpunkt wiedergegeben wurde, an dem der Block aufgezeichnet wurde.

2. System zum Aufzeichnen einer Verdolmetschung (151) eines Quellmedienobjekts (131, 141) nach Anspruch 1, wobei das Vorverarbeitungsmodul (201) und das Nachverarbeitungsmodul (202) von dem Schülercomputer (111) gehostet werden, das System ferner umfassend:
- ein Upload-Modul in dem Schülercomputer (111), das konfiguriert ist, um die Verdolmetschung (151) auf den Lehrercomputer (101) hochzuladen.

3. System zum Aufzeichnen einer Verdolmetschung (151) eines Quellmedienobjekts (131, 141) nach Anspruch 1 oder Anspruch 2, wobei jeder Block (331-33k) eine Länge von N Videoframes aufweist, wobei N eine positive ganze Zahl über Null ist.

4. System zum Aufzeichnen einer Verdolmetschung (151) eines Quellmedienobjekts (131, 141) nach Anspruch 3, wobei N konfigurierbar ist.

5. System zum Aufzeichnen einer Verdolmetschung (151) eines Quellmedienobjekts (131, 141) nach Anspruch 1 oder Anspruch 2, wobei jeder Block (351-35i) eine Länge von M Hörproben aufweist, wobei M eine positive ganze Zahl über Null ist.

6. System zum Aufzeichnen einer Verdolmetschung (151) eines Quellmedienobjekts (131, 141) nach Anspruch 5, wobei M konfigurierbar ist.

7. Verfahren zum Aufzeichnen einer Verdolmetschung (151) eines Quellmedienobjekts (131, 141), das zum Ausbilden von Schülerdolmetschern geeignet ist, bei einem Streaming des Quellmedienobjekt (131, 141) von einem Lehrercomputer (101) zu einer Vielzahl von Schülercomputern (111, 112, 113) gestreamt wird, die über ein Netzwerk mit dem Lehrercomputer (101) verbunden sind, wobei das Verfahren **dadurch gekennzeichnet ist, dass** es die folgenden Schritte umfasst:
- Aufzeichnen, durch einen Schülercomputer (111), des Quellmedienobjekts (131, 141) während es in Quellmedienobjekt-Blöcken (311-31n; 511-51n) in fester Länge oder fester Größe wiedergegeben wird;
- Erzeugen, durch den Schülercomputer (111), von Metadaten (321-32n; 521-52n) für jeden Quellmedienobjekt-Block (311-31n; 511-51n), umfassend einen Zeitstempel, der lokal in dem Schülercomputer (111) an dem Zeitpunkt erzeugt wird, an dem der assoziierte Quellmedienobjekt-Block aufgezeichnet wird, und eines Index, der indikativ für die Videoframes ist, die in dem assoziierten Quellmedienobjekt-Block aufgezeichnet sind;
- Speichern, durch den Schülercomputer (111), der Metadaten (321-32n; 521-52n) in Verbindung mit dem Quellmedienobjekt-Block (311-31n; 511-51n);
- Aufzeichnen, durch den Schülercomputer (111), von Schülersprache (MIC) und/oder Bildern (CAM), die von einem Schülercomputer (111) während einer Wiedergabe des Quellmedienobjekts (141) in Schülersprachblöcken fester Länge oder fester Größe und/oder Schülerbildblöcken (351-35i; 331-33k; 551-55i) erfasst werden;
- Erzeugen, durch den Schülercomputer (111), von Metadaten (361-36i; 341-34k; 561-56i) für jeden Schülersprachblock und/oder Schülerbildblock (351-35i; 331-33k; 551-55i), umfassend einen Zeitstempel, der lokal in dem Schülercomputer (111) an dem Zeitpunkt erzeugt wird, an dem der assoziierte Schülersprachblock und/oder Schülerbildblock (351-35i; 331-33k; 551-55i) aufgezeichnet wird, und eines Index von mindestens einer Sprachprobe oder einem Bildframe, die/das in dem Schülersprachblock und/oder Schülerbildblock (351-35i; 331-33k; 551-55i) aufgezeichnet ist;
- Speichern, durch den Schülercomputer (111), der Metadaten (361-36i; 341-34k; 561-56i) in Verbindung mit dem Schülersprachblock und/oder Schülerbildblock (351-35i; 331-33k; 551-55i);
- Zusammenstellen einer Quellmedienobjekt-Datei (411; 511) aus den Quellmedienobjekt-Blöcken (311-31n; 511-51n), und dazu Hinzufügen von stummen Audioproben / wiederholten Videoframes zu den Quellmedienobjekt-Blöcken (311-31n; 511-51n), wenn es eine Nichtübereinstimmung zwischen dem Zeitstempel und dem in den Metadaten aufgezeichneten Index gibt oder wenn die Zeitstempel fehlende Proben / Videoframes angeben, und Löschen von beschädigten Hörproben / Videoframes aus den Quellmedienobjekt-Blöcken (311-31n; 511-51n); und
- Zusammenstellen der Verdolmetschung (151; 431, 451; 551) des Quellmedienobjekts (131) aus den Schülersprachblöcken und/oder den Schülerbildblöcken (351-35i; 331-33k; 551-551), und dazu Hinzufügen stummer Hörproben / wiederholter Videoframes zu den Schülersprachblöcken und/oder den Schülerbildblöcken (351-35i; 331-33k; 551- 55i), wenn es eine Nichtübereinstimmung zwischen dem Zeitstempel und dem in den Metadaten aufgezeichneten Index gibt oder wenn die Zeitstempel fehlende Hörproben / Videoframes angeben, und Löschen beschädigter Hörproben / Videoframes aus den Schülersprachblöcken und/oder den Schülerbildblöcken (351-35i; 331-33k; 551-55i) beim Zusammenstellen der Verdolmetschung (151; 431,451; 551), sodass die Verdolmetschung (151; 431, 451; 551) kontinuierlich mit der Quellmedienobjekt-Datei (411; 511) synchronisiert wird, was impliziert, dass jeder Block in der Verdolmetschung (151; 431, 451; 551) zeitlich mit dem Abschnitt in der Quellmedienobjekt-Datei (411; 511) ausgerichtet ist, der von dem Schülercomputer (111) an dem Zeitpunkt wiedergegeben wurde, an dem der Block aufgezeichnet wurde.

## Revendications

1. Système d'enregistrement d'une interprétation (151) d'un élément multimédia source (131, 141), adapté à la formation d'interprètes étudiants lors de la diffusion dudit élément multimédia source (131, 141) depuis un ordinateur enseignant (101) vers une pluralité d'ordinateurs étudiants (111, 112, 113) qui sont connectés en réseau audit ordinateur enseignant (101), ledit système étant **caractérisé en ce qu'**il comprend :
- un module de prétraitement (201) hébergé par un ordinateur étudiant (111) configuré pour :
- enregistrer ledit élément multimédia source (131, 141) pendant sa lecture en blocs d'éléments multimédia source de longueur fixe ou de taille fixe (311 à 31n ; 511 à 51n), générer pour chaque bloc d'éléments multimédia source (311 à 31n ; 511 à 51n) des métadonnées (321 à 32n ; 521 à 52n) comprenant un horodatage généré localement dans ledit ordinateur étudiant (111) au moment où le bloc d'éléments multimédia source associé (311 à 31n ; 511 à 51n) est enregistré et un index indicatif pour les trames vidéo qui sont enregistrées dans le bloc d'éléments multimédia source associé (311 à 31n ; 511 à 51n), et stocker lesdites métadonnées (321 à 32n ; 521 à 52n) en relation avec ledit bloc d'éléments multimédia source (311 à 31n ; 511 à 51n) ; et
- enregistrer une parole d'étudiant (MIC) et/ou des images (CAM) qui sont capturées par un ordinateur étudiant (111) pendant la lecture dudit élément multimédia source (131, 141) en blocs de paroles d'étudiant de longueur fixe ou de taille fixe et/ou en blocs d'images d'étudiant (351 à 35i ; 331 à 33k ; 551 à 55i), générer pour chaque bloc de paroles d'étudiant et/ou bloc d'images d'étudiant (351 à 35i ; 331 à 33k ; 551 à 55i) des métadonnées (361 à 36i ; 341 à 34k ; 561 à 56i) comprenant un horodatage généré localement dans ledit ordinateur étudiant (111) au moment où le bloc de paroles d'étudiant associé et/ou le bloc d'images d'étudiant associé (351 à 35i ; 331 à 33k ; 551 à 55i) est enregistré et un index d'au moins un échantillon de parole ou une trame d'image enregistré dans ledit bloc de paroles d'étudiant et/ou ledit bloc d'images d'étudiant (351 à 35i ; 331 à 33k ; 551 à 55i), et stocker lesdites métadonnées (361 à 36i ; 341 à 34k ; 561 à 56i) en relation avec ledit bloc de paroles d'étudiant et/ou ledit bloc d'images d'étudiant (351 à 35i ; 331 à 33k ; 551 à 55i) ; et
- un module de post-traitement (202) configuré pour :
- composer un fichier d'éléments multimédia source (411 ; 511) à partir desdits blocs d'éléments multimédia source (311 à 31n; 511 à 51n), et y ajouter des échantillons audio silencieux / des trames vidéo répétées auxdits blocs d'éléments multimédia source (311 à31n; 511 à 51n) lorsqu'il y a une discordance entre ledit horodatage et ledit index enregistré dans lesdites métadonnées ou lorsque lesdits horodatages indiquent des échantillons / trames vidéo manquants, et supprimer des échantillons audio / trames vidéo corrompus desdits blocs d'éléments multimédia source (311 à 31n ; 511 à 51n) ; et
- composer ladite interprétation (151 ; 431, 451 ; 551) dudit élément multimédia source (131, 141) à partir desdits blocs de paroles d'étudiant et/ou desdits blocs d'images d'étudiant (351 à 35i ; 331 à 33k ; 551 à 55i), et y ajouter des échantillons audio silencieux / trames vidéo répétées auxdits blocs de paroles d'étudiant et/ou auxdits blocs d'images d'étudiant (351 à 35i ; 331 à 33k ; 551 à 55i) lorsqu'il y a une discordance entre ledit horodatage et ledit index enregistré dans lesdites métadonnées ou lorsque lesdits horodatages indiquent des échantillons / trames vidéo manquants, et supprimer des échantillons audio / trames vidéo corrompus desdits blocs de paroles d'étudiant et/ou desdits blocs d'images d'étudiant (351 à 35i ; 331 à 33k ; 551 à 55i) tout en composant ladite interprétation (151 ; 431, 451 ; 551) de sorte que ladite interprétation (151 ; 431, 451 ; 551) soit synchronisée en continu avec ledit fichier d'éléments multimédia source (411 ; 511), ce qui implique que chaque bloc dans ladite interprétation (151 ; 431, 451 ; 551) soit aligné temporellement avec la partie dudit fichier d'éléments multimédia source (411 ; 511) qui a été lue par ledit ordinateur étudiant (111) au moment où ledit bloc a été enregistré.

2. Système pour enregistrer une interprétation (151) d'un élément multimédia source (131, 141) selon la revendication 1, dans lequel ledit module de pré-traitement (201) et ledit module de post-traitement (202) sont hébergés par ledit ordinateur étudiant (111), ledit système comprenant en outre :
- un module de téléchargement dans ledit ordinateur étudiant (111) configuré pour télécharger ladite interprétation (151) vers ledit ordinateur enseignant (101).

3. Système pour enregistrer une interprétation (151) d'un élément multimédia source (131, 141) selon la revendication 1 ou la revendication 2, dans lequel chaque bloc (331 à 33k) a une longueur de N trames vidéo, N étant un nombre entier positif supérieur à zéro.

4. Système pour enregistrer une interprétation (151) d'un élément multimédia source (131, 141) selon la revendication 3, dans lequel N est configurable.

5. Système pour enregistrer une interprétation (151) d'un élément multimédia source (131, 141) selon la revendication 1 ou la revendication 2, dans lequel chaque bloc (351 à 35i) a une longueur de M échantillons audio, M étant un nombre entier positif supérieur à zéro.

6. Système pour enregistrer une interprétation (151) d'un élément multimédia source (131, 141) selon la revendication 5, dans lequel M est configurable.

7. Procédé d'enregistrement d'une interprétation (151) d'un élément multimédia source (131, 141), adapté à la formation d'interprètes étudiants lors de la diffusion dudit élément multimédia source (131, 141) depuis un ordinateur enseignant (101) vers une pluralité d'ordinateurs étudiants (111, 112, 113) qui sont connectés en réseau audit ordinateur enseignant (101), ledit procédé **caractérisé en ce qu'**il comprend en outre les étapes de :
- enregistrement par un ordinateur étudiant (111) dudit élément multimédia source (131, 141) pendant sa lecture en blocs d'éléments multimédia source de longueur fixe ou de taille fixe (311 à 31n ; 511 à 51n) ;
- génération par ledit ordinateur étudiant (111) pour chaque bloc d'éléments multimédia source (311 à 31n ; 511 à 51n) de métadonnées (321 à 32n ; 521 à 52n) comprenant un horodatage généré localement dans ledit ordinateur étudiant (111) au moment où le bloc d'éléments multimédia source est enregistré et un index indicatif des trames vidéo qui sont enregistrées dans le bloc d'éléments multimédia source associé ;
- stockage par ledit ordinateur étudiant (111) desdites métadonnées (321 à 32n ; 521 à 52n) en relation avec ledit bloc d'éléments multimédia source (311 à 31n ; 511 à 51n) ;
- enregistrement par ledit ordinateur étudiant (111) d'une parole d'étudiant (MIC) et/ou d'images (CAM) qui sont capturées par un ordinateur étudiant (111) pendant la lecture dudit élément multimédia source (141) en blocs de paroles d'étudiant de longueur fixe ou de taille fixe et/ou en blocs d'images d'étudiant (351 à 35i ; 331 à 33k ; 551 à 55i) ;
- génération par ledit ordinateur d'étudiant (111) pour chaque bloc de paroles d'étudiant et/ou bloc d'images d'étudiant (351 à 35i ; 331 à 33k ; 551 à 55i) de métadonnées (361 à 36i ; 341 à 34k ; 561 à 56i) comprenant un horodatage généré localement dans ledit ordinateur étudiant (111) au moment où le bloc de paroles d'étudiant associé et/ou le bloc d'images d'étudiant associé (351 à 35i ; 331 à 33k ; 551 à 55i) est enregistré et un index d'au moins un échantillon de parole ou une trame d'image enregistré dans ledit bloc de paroles d'étudiant et/ou ledit bloc d'images d'étudiant (351 à 35i ; 331 à 33k ; 551 à 55i) ;
- stockage par ledit ordinateur étudiant (111) desdites métadonnées (361 à 36i ; 341 à 34k ; 561 à 56i) en relation avec ledit bloc de paroles d'étudiant et/ou ledit bloc d'images d'étudiant (351 à 35i ; 331 à 33k ; 551 à 55i) ;
- composition d'un fichier d'élément multimédia source (411 ; 511) à partir desdits blocs d'élément multimédia source (311 à 31n ; 511 à 51n), et ajout à ceux-ci d'échantillons audio silencieux / de trames vidéo répétées auxdits blocs d'éléments multimédia source (311 à 31n ; 511 à 51n) lorsqu'il y a une discordance entre ledit horodatage et ledit index enregistré dans lesdites métadonnées ou lorsque lesdits horodatages indiquent des échantillons / trames vidéo manquants, et suppression d'échantillons audio / de trames vidéo corrompus desdits blocs d'éléments multimédia source (311 à 31n ; 511 à 51n) ; et
- composition de ladite interprétation (151; 431, 451; 551) dudit élément multimédia source (131) à partir desdits blocs de paroles d'étudiant et/ou desdits blocs d'images d'étudiant (351 à 35i ; 331 à 33k ; 551-55i), et ajout à ceux-ci d'échantillons audio silencieux / trames vidéo répétées auxdits blocs de paroles d'étudiant et/ou auxdits blocs d'image d'étudiant (351 à 35i ; 331 à 33k ; 551 à 55i) lorsqu'il y a une discordance entre ledit horodatage et ledit index enregistré dans lesdites métadonnées ou lorsque lesdits horodatages indiquent des échantillons / trames vidéo manquants, et suppression d'échantillons audio / de trames vidéo corrompus desdits blocs de paroles d'étudiant et/ou desdits blocs d'image d'étudiant (351 à 35i ; 331 à 33k ; 551 à 55i) tout en composant ladite interprétation (151 ; 431, 451 ; 551) de telle sorte que ladite interprétation (151 ; 431, 451 ; 551) soit synchronisée en continu avec ledit fichier d'élément multimédia source (411 ; 511), ce qui implique que chaque bloc dans ladite interprétation (151 ; 431, 451 ; 551) soit aligné temporellement avec la partie dans ledit fichier d'élément multimédia source (411 ; 511) qui a été lue par ledit ordinateur étudiant (111) au moment où ledit bloc a été enregistré.
